# EUROPÄISCHE PATENTSCHRIFT

(11) **EP 1 743 856 B1**
(45) Veröffentlichungstag und Bekanntmachung des Hinweises auf die Patenterteilung: **18.03.2009**
(21) Anmeldenummer: 06076422.2
(22) Anmeldetag: 14.07.2006
(51) Int. Cl.: B65G 47/51, B65G 47/64

(54) **Vorrichtung und Verfahren zum Transportieren von einen Massenstrom bildenden Artikeln sowie Vorrichtung zum Befüllen einer nachgeordneten Vorrichtung mit stabförmigen Artikeln**
Device and method for transporting a stream of articles and device for filling a subsequent device with rod-like articles
Dispositif et procédé de transport d'un courant d'articles et dispositif de remplissage d'un dispositif consécutif avec des articles en forme de tige

(30) Priorität: 15.07.2005 DE 102005033907
(43) Veröffentlichungstag der Anmeldung: 17.01.2007
(73) Patentinhaber: Hauni Maschinenbau AG, 21033 Hamburg (DE)
(72) Erfinder: Krößmann, Jürgen, 21493 Schwarzenbek (DE); Maurer, Alexander, 21035 Hamburg (DE)
(74) Vertreter: Wenzel & Kalkoff

(56) Entgegenhaltungen:
- EP-A2- 0 057 806
- DE-A1- 3 121 353

## Beschreibung

Die Erfindung betrifft eine Vorrichtung zum Transportieren von einen Massenstrom bildenden Artikeln von einer Eingabeeinrichtung an eine Ausgabeeinrichtung, umfassend ein endloses Förderelement mit einem Transporttrum und einem Rückführtrum, wobei das Förderelement um mindestens zwei als Antriebs- und/oder Umlenkelement ausgebildete Rollen geführt ist.

Des weiteren betrifft die Erfindung eine Vorrichtung zum Befüllen einer nachgeordneten Vorrichtung mit stabförmigen Artikeln, insbesondere einer Packmaschine, umfassend einen Füllkopf mit einem Zuführelement zum Transportieren von einen Massenstrom bildenden Artikeln, wobei das Zuführelement im Bereich einer Mündung in einen Schacht mündet und ein unteres Fördermittel, das zwei hintereinander angeordnete Transportelemente umfasst, aufweist.

Weiterhin befasst sich die Erfindung mit einem Verfahren zum Transportieren von einen Massenstrom bildenden Artikeln, umfassend die Schritte: Zuführen des Massenstroms in Hauptförderrichtung in eine Vorrichtung zum Befüllen einer nachgeordneten Vorrichtung, insbesondere nach einem der Ansprüche 16 bis 18, Transportieren des Massenstroms von einem Eingangsbereich an einen Ausgangsbereich, und Abführen des Massenstroms.

Derartige Vorrichtungen zum Befüllen einer nachgeordneten Vorrichtung kommen insbesondere in der Tabak verarbeitenden Industrie zum Einsatz. Diese Vorrichtungen dienen z.B. dazu, eine Packmaschine mit stabförmigen Artikeln, wie z.B. Zigaretten, Tabakstöcken, Filterstäben oder dergleichen zu versorgen. Mittels der Zuführeinrichtung wird ein üblicherweise mehrlagiger Massenstrom bestimmter Höhe in den Füllkopf transportiert. Mittels der Zuführeinrichtung werden die Artikel bzw. der aus diesen gebildete Massenstrom in den Bereich der Mündung geführt. Über einen Schacht, der sich der Zuführeinrichtung anschließt, werden die Artikel der Packmaschine zugeführt. Ein wesentlicher Bestandteil solcher vorgenannten Vorrichtungen ist eine Vorrichtung zum Transportieren von einen Massenstrom bildenden Artikeln von einer Eingabeeinrichtung, beispielsweise einem Zuförderer, an eine Ausgabeeinrichtung, beispielsweise einen Schacht, der einer Packmaschine zugeordnet ist. Solche Vorrichtungen zum Transportieren der Artikel umfassen ein endloses Förderelement, das um zwei Rollen, die als Antriebs- und/oder Umlenkrollen ausgebildet sind, geführt ist. Der die Artikel bzw. den Massenstrom tragende/aufnehmende Teil des Förderelementes ist der Transporttrum. Der leer laufende Teil des Förderelementes wird als Rückführtrum bezeichnet.

Im üblichen Betrieb solcher Vorrichtungen ist es notwendig, z.B. einen Produkt- oder Markenwechsel durchführen zu können. Das bedeutet, dass die Vorrichtung vollständig von dem einen Produkt bzw. der einen Marke entleert werden muss, bevor das nachfolgende Produkt bzw. die nachfolgende Marke in die Vorrichtung eingeführt werden kann. In anderen Fällen kann es notwendig sein, fehlerhafte, schadhafte oder anderweitig unerwünschte Artikel oder Abschnitte des Massenstroms aus der Vorrichtung auszuschleusen, die zuvor in irgendeiner bekannte Weise detektiert wurden.

Bei den bekannten Vorrichtungen und Verfahren ist es notwendig, die Vorrichtungen von den nachfolgenden Einrichtungen abzukoppeln und/oder die Vorrichtungen außer Betrieb zu setzen, um die Artikel in der Regel mindestens teilweise manuell aus der Vorrichtung zu bringen. Hierzu wird am Ende der Vorrichtung beispielsweise ein Leitelement aus Pappe, Blech o.ä. im Bereich der Mündung positioniert, das die Artikel, bevor sie in den Schacht fallen können, in eine Aufnahme fördert. Dies ist zum einen zeitaufwendig. Zum anderen besteht lediglich die Möglichkeit, die Vorrichtung ganz oder gar nicht zu entleeren. Mit anderen Worten ist es nicht möglich, beispielsweise in einem Massenstrom den mittleren, z.B. als fehlerhaft detektierten Abschnitt auszuschleusen. Um die fehlerhaften Artikel aus der Mitte des Massenstromes auszuschleusen, ist der gesamte Inhalt der Vorrichtung auszuschleusen, also auch Artikel, die nicht als fehlerhaft detektiert wurden. Dies führt zu einem hohen Ausschuss an Artikeln.

Eine Transportvorrichtung mit den Merkmalen des Oberbegriffs des Anspruches 1 ist z.B. aus der EP 0 057 806 bekannt, die die oben genannten Nachteile aufweist.

Es ist daher Aufgabe der vorliegenden Erfindung eine Vorrichtung zu schaffen, mit der sowohl ein gezieltes Ausschleusen detektierter Artikel als auch ein vollständiges Ausschleusen zum Entleeren der Vorrichtung gewährleistet ist. Es ist weiterhin Aufgabe der vorliegenden Erfindung, ein entsprechendes Verfahren vorzuschlagen.

Diese Aufgabe wird zum einen durch eine Vorrichtung zum Transportieren von einen Massenstrom bildenden Artikeln der eingangs genannten Art dadurch gelöst, dass der Transporttrum aus einer Durchlaufposition, in der der Transporttrum seine maximale Länge aufweist, in eine Ausschleuseposition, in der der Transporttrum gegenüber der maximalen Länge verkürzt ist, und umgekehrt bringbar ist, und dass eine dritte Rolle vorgesehen ist, wobei mindestens eine der Umlenk- und/oder Antriebsrollen zur Veränderung der Länge des Transporttrums relativ zu den anderen Umlenk- und/oder Antriebsrollen bewegbar ausgebildet ist und im Bereich des Transporttrums ein Trenn- bzw. Sperrelement angeordnet ist, das aus einer Freigabeposition, in der der Massenstrom ungehindert auf dem Transporttrum in Hauptförderrichtung transportierbar ist, in eine Sperrposition, in der der Massenstrom am freien Transport in Hauptförderrichtung gehindert ist, und umgekehrt bewegbar ist.. Mit dieser Ausbildung ist es möglich, einen Auswurfschacht innerhalb der Vorrichtung zu schaffen, der neben dem vollständigen Entleeren der Vorrichtung auch ein gezieltes Ausschleusen von einzelnen Artikeln oder von Abschnitten des Massenstroms ermöglicht. Durch das Verkürzen der eigentlichen Transportstrecke ergibt sich eine Öffnung in der Transportebene des Förderelement, durch die die Artikel in gewünschtem bzw. definiertem Umfang vom eigentlichen Massenstrom abgeteilt und gezielt abgefördert werden können. Durch die erfindungsgemäße Ausgestaltung wird daher eine konstruktiv einfache Lösung angeboten, den Auswurf von Artikeln aus einem Massenstrom automatisch zu gewährleisten. Durch das Trenn- bzw. Sperrelement wird wirksam verhindert, dass sich zum Ausschleusen detektierte Artikel beim Ausschleusen mit Artikeln, die die Öffnung bereits passiert haben, vermischen.

In einer bevorzugten Weiterbildung der Erfindung ist die in Hauptförderrichtung eingangsseitig angeordnete Rolle als bewegbare Umlenkrolle ausgebildet, wodurch zum einen sichergestellt ist, dass sämtliche Artikel die zu bildende Öffnung passieren und somit gegebenenfalls ausgeschleust werden können. Zum anderen ist damit auch ein besonders einfaches Ausschleusen von Artikeln aus der Mitte des Massenstroms sichergestellt.

Zum anderen wird die Aufgabe durch eine Vorrichtung zum Befüllen einer nachgeordneten Vorrichtung mit stabförmigen Artikeln mit den eingangs erwähnten Merkmalen dadurch gelöst, dass das in Hauptförderrichtung hintere Transportelement des unteren Fördermittels als Vorrichtung nach einem der Ansprüche 1 bis 13 ausgebildet ist. Die sich hieraus ergebenden Vorteile wurden bereits weiter oben erwähnt und beziehen sich auch auf diese Vorrichtung.

Des weiteren wird die Aufgabe auch durch ein Verfahren mit den eingangs genannten Schritten dadurch gelöst, dass der Massenstrom wahlweise vollständig am Ausgangsbereich abgeführt oder mindestens teilweise vor dem Erreichen des Ausgangsbereichs ausgeschleust wird. Die dadurch erreichten Vorteile wurden weiter oben beschrieben.

Vorzugsweise wird die Transportstrecke zum Ausschleusen von Teilen des Massenstroms oder des vollständigen Massenstroms zwischen dem Eingangsbereich und dem Ausgangsbereich geöffnet. Mir diesem Schritt ist eine variable und Platz sparende Ausschleusung von Teilen des Massenstroms oder des gesamten Massenstroms an beliebigen Positionen innerhalb der Vorrichtung realisiert.

Weitere vorteilhafte oder bevorzugte Merkmale und Verfahrensschritte ergeben sich aus den Unteransprüchen und der Beschreibung. Eine besonders bevorzugte Ausführungsform sowie das Verfahrensprinzip werden anhand der beigefügten Zeichnung näher erläutert. In der Zeichnung zeigt:
- Fig. 1: eine Seitenansicht einer schematische Darstellung einer Vorrichtung zum Befüllen einer nachgeordneten Vorrichtung,
- Fig. 2: eine Seitenansicht von Teilen eines unteren Fördermittels als Bestandteil der Vorrichtung gemäß Figur 1 in Durchlaufposition,
- Fig. 3: das untere Fördermittel gemäß Figur 2 in Ausschleuseposition,
- Fig. 4: eine schematische Darstellung einer Produktionslinie mit einer Vorrichtung zum Transportieren von einen Massenstrom bildenden Artikeln in üblicher Arbeitsanordnung,
- Fig. 5: die Produktionslinie mit einem Artikelauswurf im Auslaufbereich der Vorrichtung zum Transportieren von einen Massenstrom bildenden Artikeln, und
- Fig. 6: die Produktionslinie mit einem Artikelauswurf im Einlaufbereich der Vorrichtung zum Transportieren von einen Massenstrom bildenden Artikeln.

Die gezeigten Vorrichtungen und das beschriebene Verfahren dienen zum Ausschleusen von Zigaretten oder Filterstäben aus einem Massenstrom. Selbstverständlich können die Vorrichtungen auch in anderer Anordnung und/oder als separate Komponente zum Ausschleusen weiterer Artikel der Tabak verarbeitenden Industrie aber auch in anderen Gebieten eingesetzt werden.

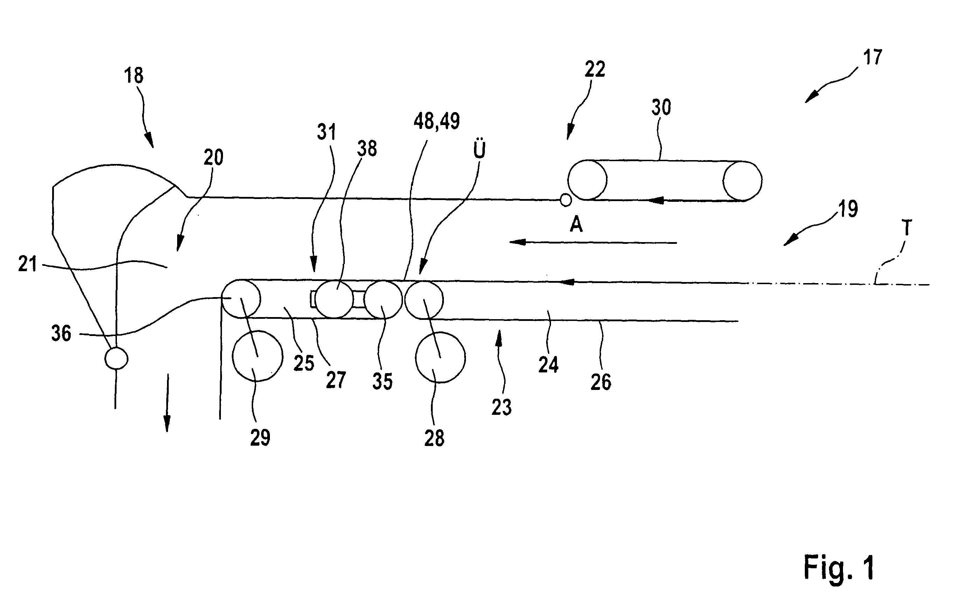

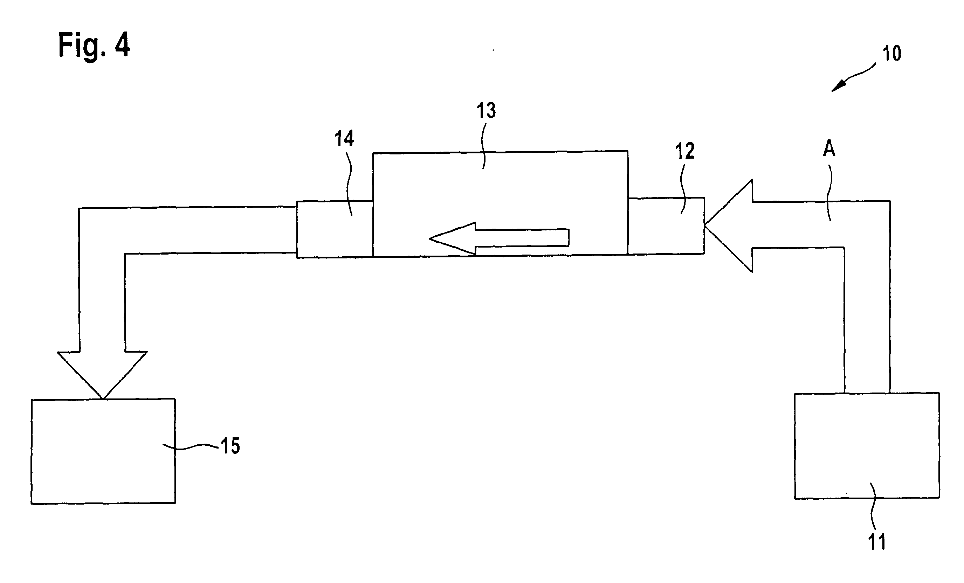

Zum besseren Verständnis der Erfindung wird anhand der Figuren 4 bis 6 zunächst der Grundaufbau sowie die Grundfunktion beschrieben. Die Detailbeschreibung erfolgt dann anhand der Figuren 1 bis 3.

In den Figuren 4 bis 6 ist eine Produktionslinie 10 aus der Tabak verarbeitenden Industrie dargestellt, die aus mehreren Komponenten gebildet ist. Rein beispielhaft umfasst die Produktionslinie 10 in Hauptförderrichtung (gemäß Pfeil A) eine Vorrichtung 11 zum Herstellen von Zigaretten oder Filterstäben, die als Maker bezeichnet wird, eine Einlaufbaugruppe 12, einen Speicher 13, eine Auslaufbaugruppe 14 sowie eine Vorrichtung 15 zum Packen (im folgenden auch als Packer bezeichnet) der (nicht dargestellten) Artikel bzw. zum Weiterverarbeiten oder -versenden der Artikel.

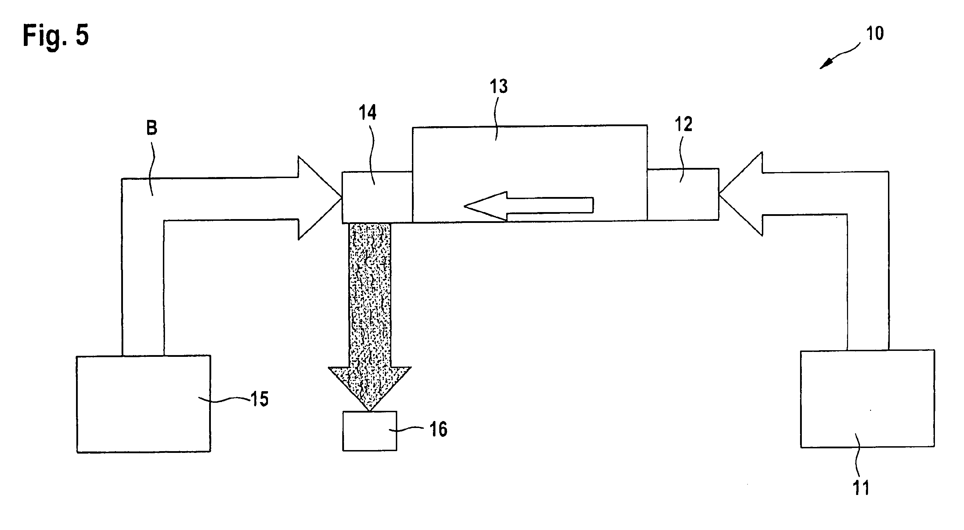

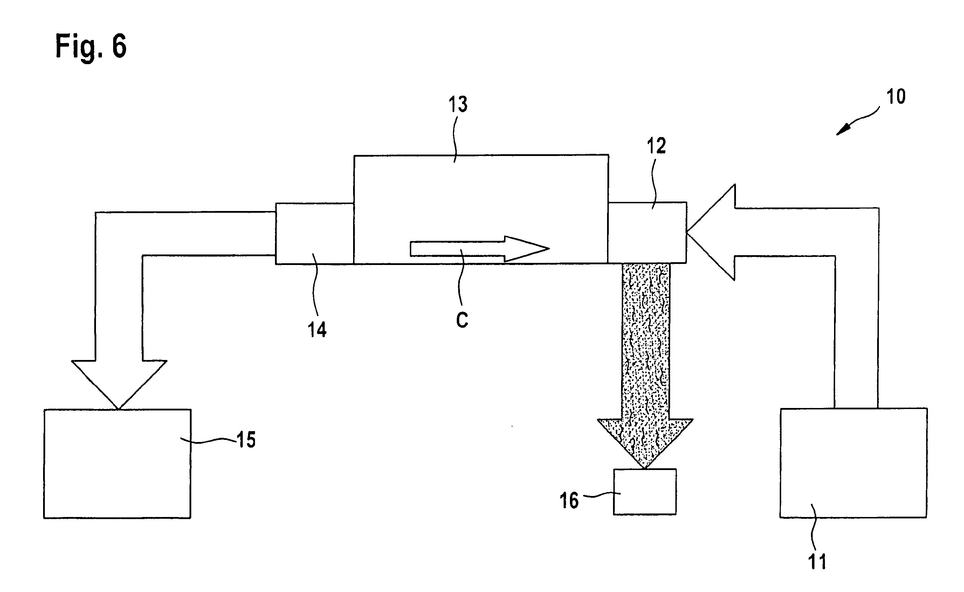

In der Figur 4 ist die Produktionslinie 10 in ihrer üblichen Arbeitsanordnung dargestellt, in der die den Massenstrom bildenden Artikel durchgängig in eine Richtung, nämlich in Richtung der Hauptförderrichtung (gemäß Pfeil A) gefördert werden. Die Artikel werden in dieser Anordnung direkt und vollständig vom Maker zum Packer transportiert. Um jedoch die Speicherstrecke innerhalb des Speichers 13 teilweise (abschnittsweise) oder vollständig zu entleeren, sind weitere Anordnungen gemäß der Figuren 5 und 6 vorgesehen. In der Anordnung gemäß Figur 5 ist ein Artikelauswurf im Bereich der Auslaufbaugruppe 14 vorgesehen. Hierzu ist die Transportrichtung zwischen der Vorrichtung 15 und der Auslaufbaugruppe 14 umgekehrt. Mit anderen Worten werden die Artikel im Bereich der Auslaufbaugruppe entgegen der Hauptförderrichtung (gemäß Pfeil A) in Richtung des Pfeils B transportiert. Dadurch wird sichergestellt, dass auch Artikel, die die eigentliche Auswurfposition bereits passiert haben, in einen (externen) Aufnahmebehälter 16 entsorgt werden können. In der Figur 6 ist schließlich eine Anordnung gezeigt, in der ein Artikelauswurf im Bereich der Einlaufbaugruppe 12 vorgesehen ist. In dieser Ausführung/Anordnung ist die Förderrichtung innerhalb des Speichers 13 selbst umgekehrt, also entgegen der Hauptförderrichtung (gemäß Pfeil A) gerichtet, wie dies durch den Pfeil C angedeutet ist.

In der Figur 1 ist ein Ausschnitt des oben genannter Speichers 13 bzw. genauer der Auslauf des Speichers 13 dargestellt. Der gezeigte Ausschnitt bzw. Auslauf des Speichers 13 ist darin als bevorzugte Ausführung an eine Vorrichtung 17 zum Befüllen einer nachgeordneten Vorrichtung (beispielsweise einem Packer) mit stabförmigen Artikeln angeschlossen. Die Vorrichtung 17 umfasst einen Füllkopf 18 zum Befüllen des Packers. Der Füllkopf 18 umfasst im wesentlichen ein Zuführelement 19 zum Transportieren des aus einer Vielzahl von Artikeln gebildeten Massenstroms in Hauptförderrichtung (gemäß Pfeil A). Das Zuführelement 19 weist eine Mündung 20 auf. Die Mündung 20 stellt den Übergang vom Zuführelement 19 in einen Schacht 21 dar. Der Schacht 21 ist ein Raum/Speicher zur Aufnahme einer bestimmten Anzahl von Artikeln und dient zum Anschluss beispielsweise eines Packers 15.

Das Zuführelement 19 endet im Bereich der Mündung 20 in den Schacht 21 und ist in der gezeigten Ausführungsform aus einem oberen Fördermittel 22 und einem unteren Fördermittel 23 gebildet. Zwischen den beiden Fördermitteln 22, 23 ist ein Aufnahme- oder auch Speicherraum ausgebildet. Das untere Fördermittel 23 umfasst mindestens zwei hintereinander angeordnete Transportelemente 24 und 25, die in Durchlaufposition eine durchgehende und vorzugsweise horizontale Transportebene T bilden. Der Zwischenraum im Bereich der Übergabe Ü der Artikel bzw. des Massenstroms vom Transportelement 24 an das Transportelement 25 ist mittels Transferelementen 48, 49 überbrückt. Es besteht die Möglichkeit, dass ein einzelnes Transferelement am Rahmen/Gestell angeordnet ist. Vorzugsweise ist jedoch sowohl den Transportelement 24 ein Transferelement 48 als auch dem Transportelement 25 ein Transferelement 49 zugeordnet. Das obere Fördermittel 22 kann auch als feststehende Führung ausgebildet sein. Auch kann die Position des in Figur 1 im Bereich des Einlaufs angeordneten Fördermittels 22 variieren und insbesondere auch nahe dem Füllkopf 18 angeordnet sein.

Das in Hauptförderrichtung (gemäß Pfeil A) hintere Transportelement 25 bildet zusammen mit dem oberen Fördermittel 22 oder einer entsprechenden Führung die Mündung 20. Jedes Transportelement 24, 25 ist als endloses Band oder Kette 26 bzw. 27 ausgebildet. Die beiden Bänder/Ketten 26, 27 bilden eine einheitliche und ebene, die Transportebene T definierende Auflagefläche. Eines der Bänder bzw. eine der Ketten 26, 27, vorzugsweise jedoch beide Bänder/Ketten 26, 27 sind mittels eines Antriebs 28 bzw. 29 antreibbar, und zwar in beide Richtungen. Das obere Fördermittel 22 umfasst mindestens ein oberes Band/eine obere Kette 30, das/die ebenfalls endlos ausgebildet ist und wahlweise mitlaufend oder aktiv (durch nicht dargestellte Antriebsmittel) antreibbar ist. In nicht explizit dargestellter Ausführung kann der Füllkopf 18 weiterhin einen zusätzlichen Speicher aufweisen, der beispielsweise durch auslenkbare Bänder/Ketten vorzugsweise des oberen Fördermittels 22 ausgebildet ist.

Das in Transportrichtung bzw. Hauptförderrichtung (gemäß Pfeil A) hintere Transportelement 25 des unteren Fördermittels 23 ist als Vorrichtung 31 zum Transportieren von einen Massenstrom bildenden Artikeln ausgebildet. Die Vorrichtung 31 umfasst ein endloses Förderelement 32, beispielsweise das Band/die Kette 27. Das Band/die Kette 27 weist einen Transporttrum 33 und einen Rückführtrum 34 auf. Der Transporttrum 33 dient zur Aufnahme und zum Transport der Artikel und verläuft im Wesentlichen in horizontaler Richtung in der Transportebene T. In der Durchlaufposition ist der Transporttrum 33 üblicherweise mit Artikeln beladen. Der Rückführtrum 34 verläuft außerhalb der Transportebene T, um das Band/die Kette 27 an den Ausgangspunkt bzw. den Übergabepunkt der Artikel an das Band/die Kette 27 zurückzuführen. Das Förderelement 32 ist um mindestens zwei als Antriebs- und oder Umlenkelement ausgebildete Rollen 35, 36 geführt.

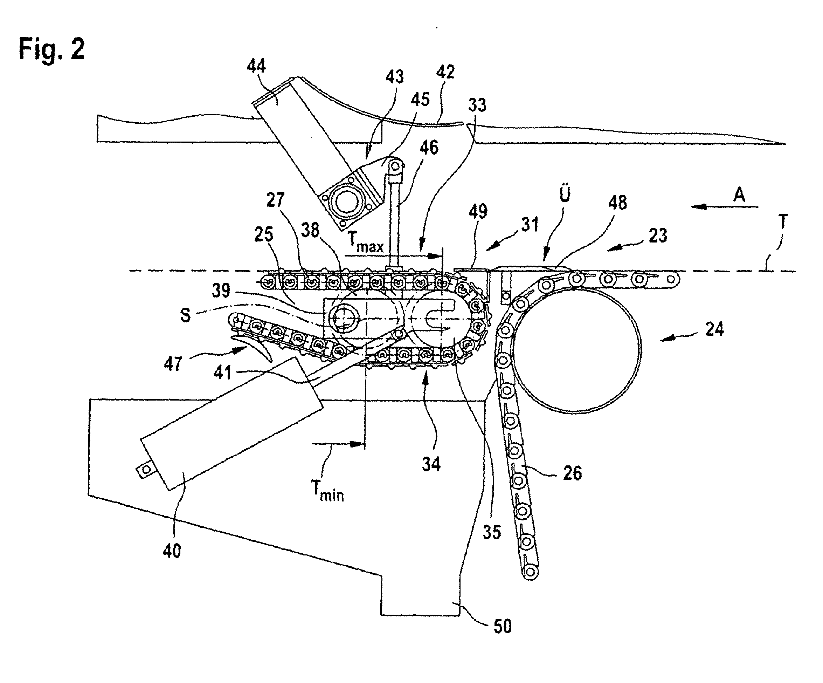

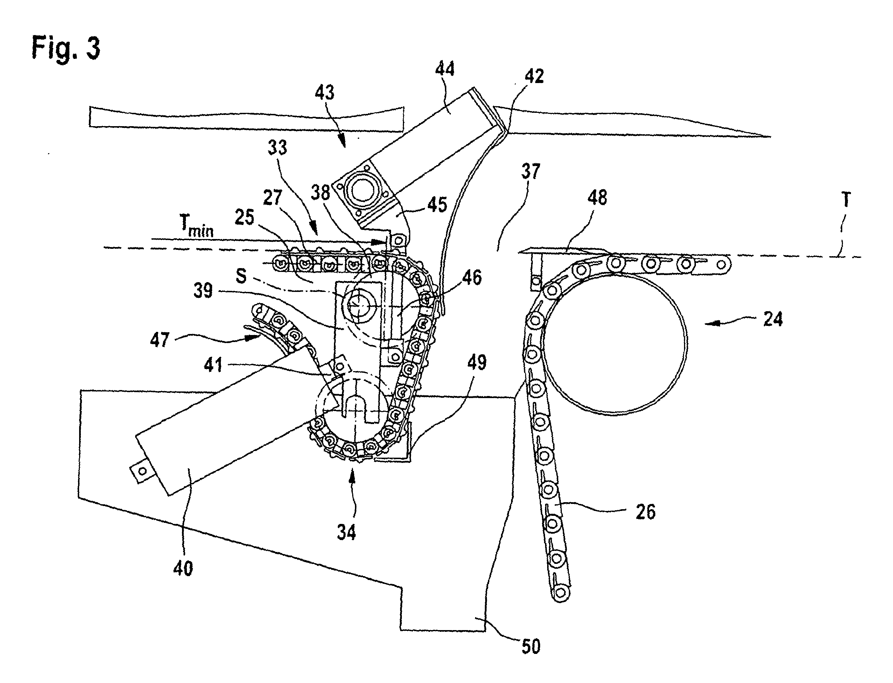

Der Transporttrum 33 ist aus der Durchlaufposition (siehe insbesondere Figur 2), in der der Transporttrum 33 seine maximale Länge (siehe Tₘₐₓ) aufweist und bis nahe an das Transportelement 24 reicht, in eine Ausschleuseposition (siehe insbesondere Figur 3), in der der Transporttrum 33 gegenüber der maximalen Länge Tₘₐₓ zu der bis zu einer minimalen Länge Tₘᵢₙ verkürzt ist, und umgekehrt bringbar. Anders ausgedrückt kann die Länge der Förderstrecke innerhalb der Vorrichtung 31 in einem Bereich zwischen Tₘᵢₙ und Tₘₐₓ verändert werden, und zwar derart, dass eine Öffnung 37 zum Ausschleusen der Artikel bildbar ist. Der Abschnitt des Transporttrums 33, der aus der Transportebene T bewegt wird, ist dann Teil des Rückführtrums 34. Diese konstruktive Ausführung ist reversibel. Das bedeutet, dass die Öffnung wahlweise zum Ausschleusen von Artikeln geöffnet oder zum Transportieren der Artikel geschlossen sein kann.

Der Vorrichtung 31 ist eine weitere dritte Rolle 38 zugeordnet. Mindestens eine der Rollen 35, 36, 38 ist zur Veränderung der Länge des Transporttrums 33 relativ zu den jeweils anderen Rollen 35, 36, 38 bewegbar ausgebildet. Die drei Umlenk- und/oder Antriebsrollen 35, 36, 38 sind in der Hauptfördernchtung (gemäß Pfeil A) in Durchlaufposition (siehe z.B. Figur 1) des Transporttrums 33 hintereinander angeordnet. Die Mittelachsen der Rollen 35, 36, 38 liegen in dieser Ausführungsform fluchtend in einer Ebene, nämlich parallel zur Transportebene T. Als besonders vorteilhaft hat sich gezeigt, dass die in Hauptförderrichtung (gemäß Pfeil A) eingangsseitig angeordnete Rolle 35 als bewegbare Umlenkrolle ausgebildet ist. Entsprechend ist die in Hauptförderrichtung ausgangsseitig angeordnete Rolle 36 als Antriebsrolle und die zwischen der bewegbaren Rolle 35 und der Antriebsrolle 36 angeordnete Rolle 38 als ortsfeste Umlenkrolle ausgebildet.

Die bewegbare Rolle 35 ist vorzugsweise schwenkbar ausgebildet. Hierzu ist die Rolle 35 an einem Träger 39 angeordnet und gelagert. Die Rolle 35 ist am Träger 39 drehbar aber ortsfest befestigt. Der Träger 39 mit der Rolle 35 ist schwenkbar ausgebildet, und zwar um einen Schwenkpunkt S. Der Schwenkpunkt S des Trägers 39 liegt außerhalb der Mittelachse der ortsfesten und an einem Gestell oder Rahmen der Vorrichtung 31 angeordneten und gelagerten Rolle 38. Vorzugsweise liegt der Schwenkpunkt S in Hauptförderrichtung hinter der Mittelachse der Rolle 38. In der gezeigten Ausführungsform ist der Schwenkpunkt S in der gleichen Ebene, in der die Mittelachsen der Rollen 35, 36, 38 in der Durchlaufposition des Transporttrums 33 liegen. Der Träger 39 ist mittels eines Zylinders 40, der hydraulisch, pneumatisch oder in anderer üblicherweise betrieben ist, verschwenkbar. Der Zylinder 40 ist am Rahmen bzw. Gestell der Vorrichtung 31 befestigt und mittels einer Kolbenstange 41 mit dem Träger 39 in Wirkverbindung. Anders ausgedrückt ist ein Ende der Kolbenstange 41 mit dem Zylinder 40 und das andere Ende der Kolbenstange 41 mit dem Träger 39 verbunden. Die Verbindung zwischen der Kolbenstange 41 und dem Träger 39 ist derart ausgebildet, dass eine relative Schwenkbewegung zwischen der Kolbenstange 41 und dem Träger 39 gewährleistet ist. Des weiteren ist das oben erwähnte Transferelement 49 am Träger 39 befestigt, so dass das Transferelement 49 der Schwenkbewegung des Trägers 39 folgt.

In nicht näher beschriebenen Ausführungsformen können auch mehrere Rollen bewegbar ausgebildet sein, so dass beispielsweise der Transporttrum 33 eingangsseitig und ausgangsseitig zu verkürzen ist. Dadurch könnten im Einlaufbereich und Auslaufbereich Öffnungen zum Ausschleusen der Artikel gebildet werden. In der Ausführung gemäß Figur 1 ist die Vorrichtung 31 dem Füllkopf 18 zugeordnet bzw. integraler Bestandteil desselben. Die Vorrichtung 31 kann aber an unterschiedlichen Positionen vorgesehen sein. Die Vorrichtung 31 kann als Einzelkomponente oder integraler Bestandteil anderer Komponenten, beispielsweise des Speichers 13, ausgebildet sein. Auch kann eine Vorrichtung 31 zusätzlich oder alternativ noch vor dem Speicher 13 vorgesehen sein, so dass Artikel noch vor der eigentlichen Speicherung im Speicher 13 ausgeschleust werden können.

Im Bereich des Transporttrums 33, vorzugsweise oberhalb des Transporttrums 33 ist ein Trenn- bzw. Sperrelement 42 angeordnet. Das Sperrelement 42 ist in der gezeigten Ausführung als gebogenen Blech ausgebildet. Andere Formen und Ausbildungen sind selbstverständlich ebenfalls möglich. Auch ist die Materialauswahl variabel. Das Sperrelement 42 ist aus einer oberen Freigabeposition (wie sie in Figur 2 dargestellt ist) in eine untere Sperrposition (wie sie in Figur 3 dargestellt ist) und umgekehrt bewegbar. In der Freigabeposition sind die Artikel bzw. der entsprechende Massenstrom ungehindert auf dem Transporttrum 33 in Hauptförderrichtung transportierbar. In der Sperrposition ist das Sperrelement 42 derart verschwenkt, dass es wie eine Trennwand auf dem Transporttrum 33 steht, so dass ein Transportstrom in Hauptförderrichtung (gemäß Pfeil A) unterbrochen ist. Mit anderen Worten trennt das Sperrelement 42 den Massenstrom in einen Bereich vor der zu bildenden (und weiter unten beschriebenen) Öffnung 37 und einen bereich hinter der zu bildenden Öffnung 37. Das Sperrelement 42 ist in der gezeigten Ausführungsform mittels einer Schwenkeinrichtung 43 am Träger 39 angeordnet. Dadurch ist eine Wirkverbindung zwischen dem Sperrelement 42 und dem Träger 39 hergestellt. Beim Verschwenken des Trägers 39 wird die Schwenkeinrichtung 43 in eingekoppeltem Zustand und damit auch das Sperrelement 42 zwangsläufig mit verschwenkt. Allerdings ist die Verbindung zwischen dem Träger 39 einerseits und der Schwenkeinrichtung 43 andererseits lösbar. Durch die Entkopplung ist ein Verschwenken des Trägers 39 möglich, während das Sperrelement 42 in der oberen Ruhe- bzw. Freigabeposition verbleibt.

Die Schwenkeinrichtung 43 weist ein hebelartiges Element 44 auf. An dem einen freien Ende des Elementes 44 ist das Sperrelement 42 angeordnet. Am anderen freien Ende ist ein Flansch 45 ausgebildet. An dem Flansch 45 ist eine Verbindungsstange 46 angeordnet, die die Schwenkeinrichtung 43 mit dem Träger 39 verbindet. Die Verbindungsstange 46 ist in einer (nicht dargestellten) Führung zwangsgeführt, derart, dass die Verbindungsstange 46 linear vorzugsweise in einer Richtung senkrecht zur Transportebene T bewegbar ist. Hierzu ist die Verbindungsstange 46 an beiden Enden gelenkig am Flansch 45 einerseits und am Träger 39 andererseits angelenkt. Jedes andere geeignete Mittel zum Verschwenken des Sperrelementes 42 aus der Freigabeposition in die Sperrposition und zurück ist ebenfalls einsetzbar,

Alternativ ist das Sperrelement 42 beispielsweise separat im Bereich des Rahmens/des Gestells der Vorrichtung 31 angeordnet und mit einem eigenen (nicht dargestellten) Antrieb, beispielsweise einem Pneumatikzylinder, zum Verschwenken aus der Freigabeposition in die Sperrposition und umgekehrt ausgestattet. Andere Möglichkeiten der Bewegung des Sperrelementes 42 in linearer und/oder bogenförmiger Richtung sind ebenfalls möglich.

Dem Förderelement 32 ist des weiteren ein Spannelement 47 zugeordnet. Das Spannelement 47, das z.B. ein Federblech oder dergleichen sein kann, ist im Bereich des Rückführtrums 34 angeordnet und hält die Spannung des Bandes/der Kette 27 unabhängig von der Lage und Position der Rollen 35, 36, 38 im Wesentlichen konstant. Die Band- bzw. Kettenspannung kann aber auch mit jedem anderen üblichen Mittel gehalten und gesteuert werden.

Im folgenden werden die unterschiedlichen Verfahrensprinzipien insbesondere anhand der Figuren 1 bis 6 näher erläutert:

### Übliches Produktionsverfahren (siehe insbesondere Figuren 1 und 2)

Im normalen Produktionsbetrieb befindet sich das Sperrelement 42 in der oberen Ruheposition. Der Massenstrom wird in Hauptförderrichtung A bewegt. Dabei wird der Massenstrom von dem Transportelement 24 über Transferelemente 48, 49 oder dergleichen an das Transportelement 25 übergeben und von diesem durch die Mündung 20 dem Schacht 21 zugeführt. Dabei sind beide Fördermittel 22 und 23 in Hauptförderrichtung A angetrieben bzw. bewegt. Bei diesem Verfahren ist die Transportebene T quasi geschlossen, so dass sämtliche Artikel, die den Massenstrom bilden, von einer Eingabeeinrichtung an eine Ausgabeeinrichtung transportiert werden, wobei die Artikel während des Transports optional auch mindestens teilweise gespeichert werden können.

### Gezieltes Ausschleusen detektierter Produkte

Es besteht jedoch u.U. die Notwendigkeit oder der Wunsch, bestimmte Artikel bzw. Abschnitte des Massenstroms gezielt ausschleusen zu können, beispielsweise bei fehlerhaften Artikeln oder zu Stichprobenzwecken oder dergleichen. In einem solchen Fall werden die auszuschleusenden Artikel detektiert. Sobald die detektierten Artikel bzw. der detektierte Abschnitt den Übergangsbereich Ü zwischen den Transportelementen 24, 25 erreicht hat, bildet sich die Öffnung 37, indem der Träger 39 mit der Rolle 35 verschwenkt wird. Durch das Verschwenken wird der Transporttrum 33 gegenüber seiner maximalen Länge, die er in der Durchlaufposition aufweist, verkürzt, so dass die Transportebene T unterbrochen ist. Da die Gesamtlänge des Transportelementes 25 bzw. genauer des Bandes/der Kette 27 konstant ist, verlängert sich der Rückführtrum 34 um genau diese Länge. Gleichzeitig mit der Bildung der Öffnung 37 wird das Sperrelement 42 aus seiner Freigabeposition in seine Sperrposition geschwenkt. Das Sperrelement 42 steht dann in der Sperrposition unmittelbar vor der Rolle 38. Dadurch wird einerseits verhindert, dass Artikel, die die Öffnung 37 bereits passiert haben, durch die Öffnung 37 zurück in einen Auswurfschacht 50 fallen. Andererseits verhindert das Sperrelement 42, dass beispielsweise als fehlerhaft detektierte Artikel doch über die Öffnung 37 hinweg weiter transportiert werden bzw. sich mit den nicht detektierten Artikeln vermischen. Mit anderen Worten bildet das Sperrelement 42 ein wirksames Hindernis zwischen den beiden Transportelementen 24, 25.

Die in Hauptförderrichtung A unmittelbar vor der Öffnung 37 auf dem Transportelement 24 liegenden Artikel werden weiter in Hauptförderrichtung A bewegt, so dass sie durch die Öffnung in einen Auswurfschacht 50 fallen. Optional können diese ausgeschleusten Artikel dann in dem Aufnahmebehälter 16 gesammelt werden. Während des Ausschleusens der detektierten Artikel steht das Transportelement 25 still. Nach dem Beenden des Ausschleusens wird der Auswurfschacht 50 bzw. die Öffnung 37 wieder geschlossen. Mit dem Verschwenken des Trägers 39 und damit der Rolle 35 zum Schließen der Öffnung 37 wird auch das Sperrelement 42 wieder in die Freigabeposition bewegt. Alternativ kann das Verschwenken des Sperrelementes 42 auch unabhängig vom Träger 39 erfolgen. Die durch das Ausschleusen entstandene Lücke zwischen den bereits auf dem Transportelement 25 befindlichen Artikeln und den vom Transportelement 24 nachfolgenden Artikeln wird geschlossen, indem das Transportelement 25 noch still steht, während das Transportelement 24 angetrieben wird. Sobald die Lücke geschlossen ist, wird auch das Transportelement 25 wieder angetrieben.

### Vollständiges Entleeren des gesamten Systems

In einigen Fällen, beispielsweise bei einem Produktwechsel, kann es jedoch notwendig oder wünschenswert sein, das System, also insbesondere die Vorrichtung 31 vollständig zu entleeren. In solchen Fällen wird die Öffnung 37 in oben bereits beschriebener Weise gebildet. Die Artikel bzw. der in die Vorrichtung 31 eingehende Massenstrom wird durch das Transportelement 24 direkt der Öffnung 37 zugeführt, wobei die Artikel dann durch die Öffnung 37 in den Auswurfschacht 50 fallen, beispielsweise in den darunter befindlichen Aufnahmebehälter 16. Ein Teil der Artikel bzw. der vorauslaufende Teil des Massenstroms hat zum Zeitpunkt des Bildens der Öffnung 37 durch Verschwenken des Trägers 39 die Öffnung 37 bereits passiert und liegt in Hauptförderrichtung (gemäß Pfeil A) hinter der Öffnung 37 auf dem dann verkürzten Transporttrum 33 des Transportelementes 25. Um auch diese Artikel bzw. diesen Abschnitt des Massenstroms aus der Vorrichtung 31 auszuschleusen, wird die Antriebsrichtung des in Hauptförderrichtung hinteren Transportelementes 25 umgedreht, so dass sich das Band/die Kette 27 entgegen der Hauptförderrichtung bewegt. Dadurch werden die Artikel der Öffnung 37 zugeführt und über diese in den Auswurfschacht 50 geschleust und damit dem Aufnahmebehälter 16 zugeführt. Während des Ausschleusens aller Artikel verbleibt das Sperrelement 42 in seiner Freigabeposition. Hierzu muss es u.U. von der Verbindung zum Träger 39 entkoppelt werden, damit die Schwenkbewegung des Trägers 39 nicht auf das Sperrelement 42 übertragen wird bzw. muss der eigene (nicht dargestellte) Antrieb dafür sorgen, dass das Sperrelement in der oberen Position verbleibt. Nach Beendigung des Ausschleusens, also bei vollständig entleertem System, wird die Öffnung 37 in der oben beschriebenen Weise wieder geschlossen.

Bei sämtlichen Schwenkbewegungen des Trägers 39 wird durch die Lage des Schwenkpunktes S der Rolle 35 einerseits und das Spannelement 47 andererseits sichergestellt, dass das Band/die Kette 27 permanent unter der eingestellten Spannung steht.

## Patentansprüche

1. Vorrichtung zum Transportieren von einen Massenstrom bildenden Artikeln von einer Eingabeeinrichtung an eine Ausgabeeinrichtung, umfassend ein endloses Förderelement (32) mit einem Transporttrum (33) und einem Rückführtrum (34), wobei das Förderelement (32) um mindestens zwei als Antriebs- und/oder Umlenkelement ausgebildete Rollen (35, 36) geführt ist, **dadurch gekennzeichnet, dass** der Transporttrum (33) aus einer Durchlaufposition, in der der Transporttrum (33) seine maximale Länge aufweist, in eine Ausschleuseposition, in der der Transporttrum (33) gegenüber der maximalen Länge verkürzt ist, und umgekehrt bringbar ist, und dass eine dritte Rolle (38) vorgesehen ist, wobei mindestens eine der Umlenk- und/oder Antriebsrollen (35, 36) zur Veränderung der Länge des Transporttrums (33) relativ zu den anderen Umlenk- und/oder Antriebsrollen bewegbar ausgebildet ist und im Bereich des Transporttrums (33) ein Trenn- bzw. Sperrelement (42) angeordnet ist, das aus einer Freigabeposition, in der der Massenstrom ungehindert auf dem Transporttrum (33) in Hauptförderrichtung transportierbar ist, in eine Sperrposition, in der der Massenstrom am freien Transport in Hauptförderrichtung gehindert ist, und umgekehrt bewegbar ist.

2. Vorrichtung nach Anspruch 1, **dadurch gekennzeichnet, dass** mindestens ein Abschnitt des Transporttrums (33) in einen Rückführtrum (34) und zurück überführbar ist.

3. Vorrichtung nach Anspruch 2, **dadurch gekennzeichnet, dass** dem Förderelement (32) ein Spannelement (47) zugeordnet ist, das im Bereich des Rückführtrums (34) angeordnet ist.

4. Vorrichtung nach einem der Ansprüche 1 bis 3, **dadurch gekennzeichnet, dass** die drei Umlenk- und/oder Antriebsrollen (35, 36, 38) in Hauptförderrichtung (Pfeil A) des Massenstroms in Durchlaufposition des Transporttrums (33) hintereinander angeordnet sind, wobei die Mittelachsen der Umlenk- und/oder Antriebsrollen (35, 36, 38) vorzugsweise in einer horizontalen Ebene liegen.

5. Vorrichtung nach einem der Ansprüche 1 bis 4, **dadurch gekennzeichnet, dass** die in Hauptförderrichtung des Massenstroms eingangsseitig angeordnete Rolle (35) als bewegbare Umlenkrolle ausgebildet ist.

6. Vorrichtung nach einem der Ansprüche 1 bis 5, **dadurch gekennzeichnet, dass** die in Hauptförderrichtung des Massenstroms ausgangsseitig angeordnete Rolle (36) als Antriebsrolle und die zwischen der bewegbaren Rolle (35) und der Antriebsrolle (36) angeordnete Rolle (38) als ortsfeste Umlenkrolle ausgebildet ist.

7. Vorrichtung nach Anspruch 5 oder 6, **dadurch gekennzeichnet, dass** die bewegbare Rolle (35) schwenkbar ausgebildet ist.

8. Vorrichtung nach einem der Ansprüche 5 bis 7, **dadurch gekennzeichnet, dass** die schwenkbare Rolle (35) an einem Träger (39) angeordnet ist.

9. Vorrichtung nach Anspruch 8, **dadurch gekennzeichnet, dass** der Träger (39) verschwenkbar ausgebildet ist, wobei der Schwenkpunkt S des Trägers (39) außerhalb der Mittelachse, vorzugsweise in Hauptförderrichtung des Massenstroms hinter der Mittelachse, der ortsfesten Umlenkrolle (38) liegt.

10. Vorrichtung nach Anspruch 9, **dadurch gekennzeichnet, dass** der Schwenkpunkt S des Trägers (39) in derselben horizontalen Ebene liegt wie die Mittelachsen der drei Antriebs- und/oder Umlenkrollen (35, 36, 38) in der Durchlaufposition des Transporttrums (33).

11. Vorrichtung nach einem der Ansprüche 8 bis 10, **dadurch gekennzeichnet, dass** der Träger (39) mittels eines Zylinders (40) verschwenkbar ist, wobei der Zylinder (40) über eine Kolbenstange (41) mit dem Träger (39) in Wirkverbindung ist.

12. Vorrichtung nach Anspruch 11, **dadurch gekennzeichnet, dass** das Trenn- bzw. Sperrelement (42) mittels einer Schwenkeinrichtung (43) am Träger (39) angeordnet ist und mit diesem in Wirkverbindung steht.

13. Vorrichtung nach Anspruch 11, **dadurch gekennzeichnet, dass** das Trenn- bzw. Sperrelement (42) mit einem eigenen Antrieb aus der Freigabeposition in die Sperrposition und zurück bewegbar ist.

14. Vorrichtung zum Befüllen einer nachgeordneten Vorrichtung mit stabförmigen Artikeln, insbesondere einer Packmaschine, umfassend einen Füllkopf (18) mit einem Zuführelement (19) zum Transportieren von einen Massenstrom bildenden Artikeln, wobei das Zuführelement (19) im Bereich einer Mündung (20) in einen Schacht (21) mündet und ein unteres Fördermittel (23), das zwei hintereinander angeordnete Transportelemente (24, 25) umfasst, aufweist, **dadurch gekennzeichnet, dass** das in Hauptförderrichtung hintere Transportelement (25) des unteren Fördermittels (23) als Vorrichtung (31) nach einem der Ansprüche 1 bis 13 ausgebildet ist.

15. Vorrichtung nach Anspruch 14, **dadurch gekennzeichnet, dass** der Abschnitt zwischen den beiden Transportelementen (24, 25) des unteren Fördermittels (23) durch mindestens ein Transferelement (48, 49) geschlossen ist.

16. Vorrichtung nach Anspruch 14 oder 15, **dadurch gekennzeichnet, dass** zwei Transferelemente (48, 49) vorgesehen sind, wobei ein Transferelement (48) dem vorderen Transportelement (24) und das andere Transferelement (49) dem hinteren Transportelement (25) zugeordnet ist.

17. Verfahren zum Transportieren von einen Massenstrom bildenden Artikeln, umfassend die Schritte:
- Zuführen des Massenstroms in Hauptförderrichtung in eine Vorrichtung nach einem der Ansprüche 14 bis 16 zum Befüllen einer nachgeordneten Vorrichtung,
- Transportieren des Massenstroms von einem Eingangsbereich an einen Ausgangsbereich, und
- Abführen des Massenstroms,
**dadurch gekennzeichnet, dass** der Massenstrom wahlweise vollständig am Ausgangsbereich abgeführt oder mindestens teilweise vor dem Erreichen des Ausgangsbereichs ausgeschleust wird.

18. Verfahren nach Anspruch 17, **dadurch gekennzeichnet, dass** die Transportstrecke zum Ausschleusen von Teilen des Massenstroms oder des vollständigen Massenstroms zwischen dem Eingangsbereich und dem Ausgangsbereich geöffnet wird.

19. Verfahren nach Anspruch 17 oder 18, **dadurch gekennzeichnet, dass** das Ausschleusen automatisch erfolgt.

## Claims

1. Apparatus for transporting articles forming a mass flow from an input device to an output device, including an endless conveying element (32) with a transport run (33) and a return run (34), the conveying element (32) being guided about at least two rollers (35, 36) designed as a driving and/or deflecting element, **characterized in that** the transport run (33) can be moved out of a throughflow position in which the transport run (33) exhibits its maximum length, into a discharge position in which the transport run (33) is shortened from the maximum length, and vice versa, and that a third roller (38) is provided, at least one of the deflecting and/or driving rollers (35, 36) being movable relative to the other deflecting and/or driving rollers for altering the length of the transport run (33) and in the region of the transport run (33) is arranged a separating or blocking element (42) which is movable out of a release position in which the mass flow can be transported unhindered on the transport run (33) in the main direction of conveying, into a blocking position in which the mass flow is prevented from free transport in the main direction of conveying, and vice versa.

2. Apparatus according to claim 1, **characterized in that** at least one section of the transport run (33) can be converted to a return run (34) and back.

3. Apparatus according to claim 2, **characterized in that** associated with the conveying element (32) is a tensioning element (47) which is arranged in the region of the return run (34).

4. Apparatus according to any one of claims 1 to 3, **characterized in that** the three deflecting and/or driving rollers (35, 36, 38) are arranged one behind the other in the main direction of conveying (arrow A) of the mass flow in the throughflow position of the transport run (33), the centre axes of the deflecting and/or driving rollers (35, 36, 38) preferably lying in a horizontal plane.

5. Apparatus according to any one of claims 1 to 4, **characterized in that** the roller (35) arranged on the inlet side in the main direction of conveying of the mass flow is designed as a movable deflecting roller.

6. Apparatus according to any one of claims 1 to 5, **characterized in that** the roller (36) arranged on the outlet side in the main direction of conveying of the mass flow is designed as a driving roller, and the roller (38) arranged between the movable roller (35) and the driving roller (36) is designed as a stationary deflecting roller.

7. Apparatus according to claim 5 or 6, **characterized in that** the movable roller (35) is pivotable.

8. Apparatus according to any one of claims 5 to 7, **characterized in that** the pivotable roller (35) is arranged on a carrier (39).

9. Apparatus according to claim 8, **characterized in that** the carrier (39) is pivotable, the pivot point S of the carrier (39) being located outside the centre axis of the stationary deflecting roller (38), preferably behind the centre axis in the main direction of conveying of the mass flow.

10. Apparatus according to claim 9, **characterized in that** the pivot point S of the carrier (39) lies in the same horizontal plane as the centre axes of the three driving and/or deflecting rollers (35, 36, 38) in the throughflow position of the transport run (33).

11. Apparatus according to any one of claims 8 to 10, **characterized in that** the carrier (39) is pivotable by means of a cylinder (40), the cylinder (40) being functionally connected to the carrier (39) by a piston rod (41).

12. Apparatus according to claim 11, **characterized in that** the separating or blocking element (42) is arranged on the carrier (39) by means of a pivot device (43) and functionally connected thereto.

13. Apparatus according to claim 11, **characterized in that** the separating or blocking element (42) is movable by its own drive out of the release position into the blocking position and back.

14. Apparatus for filling a subsequent apparatus with rod-shaped articles, in particular a packer, including a filling head (18) with a feed element (19) for transporting articles forming a mass flow, the feed element (19) leading into a chute (21) in the region of an orifice (20) and comprising a lower conveying means (23) which includes two transport elements (24, 25) arranged one behind the other, **characterized in that** the rear transport element (25) of the lower conveying means (23), in the main direction of conveying, is designed as an apparatus (31) according to any one of claims 1 to 13.

15. Apparatus according to claim 14, **characterized in that** the section between the two transport elements (24, 25) of the lower conveying means (23) is closed by at least one transfer element (48, 49).

16. Apparatus according to claim 14 or 15, **characterized in that** two transfer elements (48, 49) are provided, one transfer element (48) being associated with the front transport element (24) and the other transfer element (49) with the rear transport element (25).

17. Method for transporting articles forming a mass flow, including the steps of:
- feeding the mass flow in the main direction of conveying into an apparatus according to any one of claims 14 to 16 for filling a subsequent apparatus,
- transporting the mass flow from an inlet region to an outlet region, and
- carrying the mass flow away,
**characterized in that** the mass flow is optionally carried away completely in the outlet region or discharged at least partially before reaching the outlet region.

18. Method according to claim 17, **characterized in that** the transport section for discharge of parts of the mass flow or the whole mass flow is opened between the inlet region and the outlet region.

19. Method according to claim 17 or 18, **characterized in that** discharge is effected automatically.

## Revendications

1. Dispositif de transport d'articles formant un flux massique d'un dispositif d'entrée à un dispositif de sortie, comprenant un élément d'acheminement sans fin (32) avec un brin de transport (33) et un brin de retour (34), l'élément d'acheminement (32) étant guidé autour de au moins deux galets (35, 36) conçus en tant qu'élément moteur et/ou de renvoi, **caractérisé en ce que** le brin de transport (33) peut être amené d'une position de passage dans laquelle le brin de transport (33) présente sa longueur maximale, à une position de sassement, dans laquelle le brin de transport (33) est raccourci par rapport à la longueur maximale, et inversement, et **en ce que** un troisième galet (38) est prévu, dans lequel au moins un des galets de renvoi et/ou moteur (35, 36) destiné à modifier la longueur du brin de transport (33) est conçu de manière à pouvoir être déplacé relativement aux autres galets de renvoi et/ou moteur et dans la zone du brin de transport (33) est disposé un élément de séparation respectivement de blocage (42) qui peut être déplacé d'une position de relâchement, dans laquelle le flux massique peut être transporté sans entraves sur le brin de transport (33) dans le sens d'acheminement principal, à une position de blocage, dans laquelle le flux massique est arrêté au niveau du transport libre dans le sens d'acheminement principal, et inversement.

2. Dispositif selon la revendication 1, **caractérisé en ce qu'**au moins une section du brin de transport (33) peut être convoyée dans un brin de retour (34) et en retour.

3. Dispositif selon la revendication 2, **caractérisé en ce qu'**un élément de tension (47), qui est disposé dans la zone du brin de retour (34), est associé à l'élément d'acheminement (32).

4. Dispositif selon l'une des revendications 1 à 3, **caractérisé en ce que** les trois galets de renvoi et/ou moteur (35, 36, 38) sont disposés les uns derrière les autres dans le sens d'acheminement principal (flèche A) du flux massique dans une position de passage du brin de transport (33), les axes médians des galets de renvoi et/ou moteur (35, 36, 38) se trouvant de préférence dans un plan horizontal.

5. Dispositif selon l'une des revendications 1 à 4, **caractérisé en ce que** le galet (35) disposé du côté de l'entrée dans le sens d'acheminement principal du flux massique est conçu comme un galet de renvoi pouvant être déplacé.

6. Dispositif selon l'une des revendications 1 à 5, **caractérisé en ce que** le galet disposé du côté de l'entrée dans le sens d'acheminement principal du flux massique (36) est conçu comme un galet moteur et le galet (38) disposé entre le galet pouvant être déplacé (35) et le galet moteur (36) comme un galet de renvoi fixe.

7. Dispositif selon la revendication 5 ou 6, **caractérisé en ce que** le galet pouvant être déplacé (35) est conçu de manière pivotante.

8. Dispositif selon l'une des revendications 5 à 7, **caractérisé en ce que** le galet pivotant (35) est disposé sur un support (39).

9. Dispositif selon la revendication 8, **caractérisé en ce que** le support (39) est conçu de manière à pouvoir basculer, le point oscillant S du support (39) se trouvant en dehors de l'axe médian, de préférence dans le sens d'acheminement principal du flux massique derrière l'axe médian, du galet de renvoi fixe (38).

10. Dispositif selon la revendication 9, **caractérisé en ce que** le point oscillant S du support (39) se trouve dans le même plan horizontal que les axes médians des trois galets moteur et/ou de renvoi (35, 36, 38) dans la position de passage du brin de transport (33).

11. Dispositif selon l'une des revendications 8 à 10, **caractérisé en ce que** le support (39) peut être pivoté à l'aide d'un cylindre (40), le cylindre (40) étant en liaison active avec le support (39) au moyen d'une tige de piston (41).

12. Dispositif selon la revendication 11, **caractérisé en ce que** l'élément de séparation ou bien de blocage (42) est disposé à l'aide d'un dispositif de pivotement (43) sur le support (39) et se trouve en relation active avec celui-ci.

13. Dispositif selon la revendication 11, **caractérisé en ce que** l'élément de séparation ou bien de blocage (42) peut être déplacé avec un entraînement propre de la position de relâchement à la position de blocage et en retour.

14. Dispositif de remplissage d'un dispositif en aval avec des articles en forme de tige, en particulier une machine à emballer, comprenant une tête de remplissage (18) avec un élément d'acheminement (19) destiné au transport d'articles formant un flux massique, l'élément d'acheminement (19) débouchant dans la zone d'une bouche (20) dans un puits (21) et présente un moyen d'acheminement inférieur (23), qui comprend deux éléments de transport (24, 25) disposés l'un derrière l'autre, **caractérisé en ce que** l'élément de transport arrière (25), dans le sens principal d'acheminement, du moyen d'acheminement inférieur (23) est conçu en tant que dispositif (31) selon l'une des revendications 1 à 13.

15. Dispositif selon la revendication 14, **caractérisé en ce que** la section entre les deux éléments de transport (24, 25) du moyen d'acheminement inférieur (23) est fermée par au moins un élément de transfert (48, 49).

16. Dispositif selon la revendication 14 ou 15, **caractérisé en ce que** deux éléments de transfert (48, 49) sont prévus, un élément de transfert (48) étant associé à l'élément de transport avant (24) et l'autre élément de transfert (49) à l'élément de transport arrière (25).

17. Procédé destiné à transporter des articles formant un flux massique comprenant les étapes consistant à :
- amener le flux massique dans le sens d'acheminement principal dans un dispositif selon l'une des revendications 14 à 16 pour remplir un dispositif en aval,
- transporter le flux massique d'une zone d'entrée à une zone de sortie, et
- emmener le flux massique,
**caractérisé en ce que** le flux massique est emmené au choix intégralement à la zone de sortie ou est sassé au moins partiellement avant d'atteindre la zone de sortie.

18. Procédé selon la revendication 17, **caractérisé en ce que** la voie de transport destinée au sassement de parties du flux massique ou du flux massif intégral entre la zone d'entrée et la zone de sortie est ouverte.

19. Procédé selon la revendication 17 ou 18, **caractérisé en ce que** le sassement se produit automatiquement.
